Europäisches Patentamt

European Patent Office

Office européen des brevets

(11) Publication number: **0 409 804 A1**

# (12) EUROPEAN PATENT APPLICATION

(21) Application number: **90830315.9**

(22) Date of filing: **10.07.90**

(51) Int. Cl.⁵: **B60J 7/12**

(30) Priority: **17.07.89 IT 5325589 U**

(43) Date of publication of application:
**23.01.91 Bulletin 91/04**

(84) Designated Contracting States:
**AT BE CH DE DK ES FR GB GR IT LI LU NL SE**

(71) Applicant: **I.L.C.A. MAGGIORA S.p.A.**
**Via Natale Palli, 8 Borgo San Pietro**
**I-10021 Moncalieri (Torino)(IT)**

(72) Inventor: **Maggiora, Bruno**
**Via Natale Palli 8**
**I-10021 Moncalieri (Torino)(IT)**

(74) Representative: **Jacobacci, Filippo et al**
**c/o JACOBACCI-CASETTA & PERANI S.p.A.**
**Via Alfieri 17 17**
**I-10121 Torino(IT)**

(54) **A support structure for a flexible folding rear hood for motor cars.**

(57) A support structure for a flexible folding rear hood for motor cars includes a fixed base structure (8), to which is articulated an arcuate intermediate structure (30), and a front structure (34) including an arcuate element (36) which is articulated to the base structure (8) about the same articulation axis (A) as the intermediate structure (30). The front structure (34) also includes a pair of side arms (40) articulated at their rear ends to the arcuate element (36) and at their front ends to a cross member (42) articulated to the opposite ends of the arms (40) from the intermediate structure. Each of the arms includes two portions (48, 50) articulated to each other at its centre by means of a connecting part (52), and a sleeve (54) mounted for sliding along the arm (40) and movable between a first operative position, in which the whole of the sleeve extends over one of the portions, and a second operative position in which the sleeve extends across the region of articulation of the two portions.

FIG. 2

## A SUPPORT STRUCTURE FOR A FLEXIBLE FOLDING REAR HOOD FOR MOTOR CARS

The present invention relates to a support structure for a flexible folding rear hood for motor cars and its purpose is to provide a simple and compact structure which enables the fabric hood to be opened and closed quickly and easily.

According to the present invention, this object is achieved by the provision of a support structure which comprises:

a) a fixed base structure,

b) an arcuate intermediate structure articulated at its ends to the fixed structure about a transverse axis, and

c) a front structure comprising:

- an arcuate element articulated at its ends to the base structure about the same articulation axis as the intermediate structure,

- a pair of side arms articulated at their rear ends to the arcuate element, and

- a front cross member which is articulated to the opposite ends of the arms from the intermediate structure and which has attachments for its rapid connection to an intermediate cross member of the bodywork,

each of the arms including two portions which are articulated to each other at its centre by means of a connecting part and a sleeve which is mounted for sliding along the arm and which is movable between a first operative position, in which the sleeve extends exclusively over one of the portions, and a second operative position, in which the sleeve extends across the region of articulation of the two portions.

Further characteristics and advantages of the present invention will become clear from the detailed description which follows with reference to the appended drawings, provided by way of non-limiting example, in which:

Figure 1 is a perspective view of a motor vehicle provided with a structure according to the present invention,

Figure 2 is a perspective view of a support structure according to the present invention,

Figures 3 and 4 are perspective views showing the structure of Figure 2 during the folding of the hood,

Figure 5 is a perspective view of the element indicated by the arrow V in Figure 4,

Figures 7 and 8 are exploded perspective views of the parts indicated by the arrows VII and VIII in Figure 2, on an enlarged scale, and

Figures 9 is a perspective view of the part indicated by the arrow IX in Figure 2 on an enlarged scale.

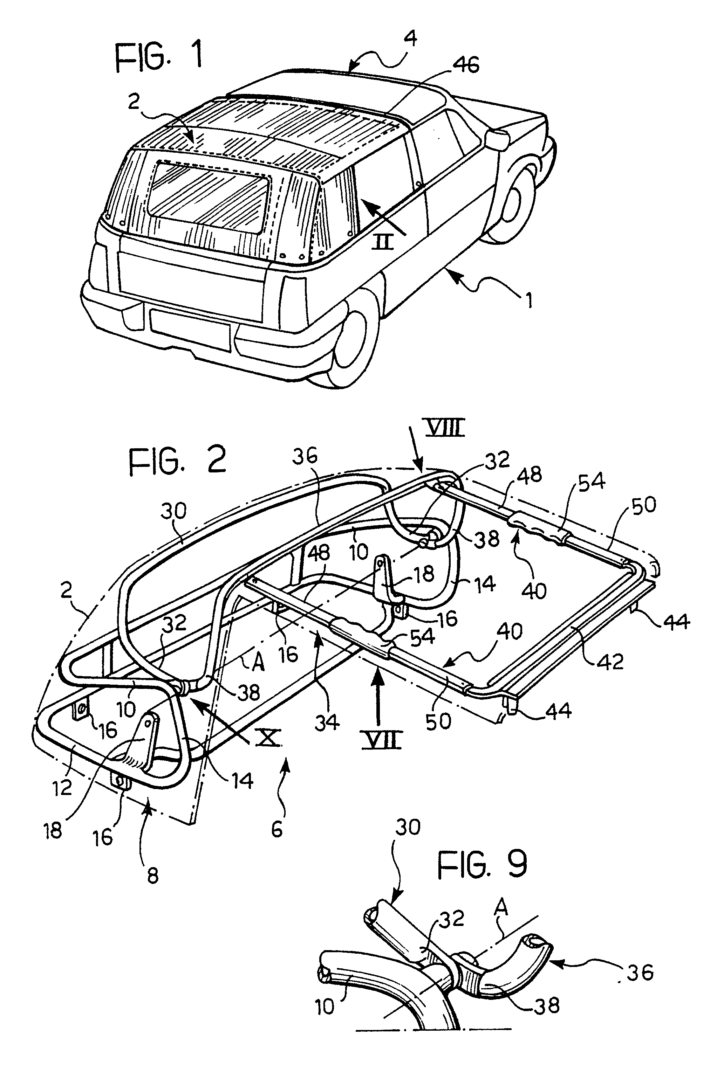

With reference to Figure 1, a vehicle, indicated 1, has a flexible folding fabric hood 2 for covering the rear part of the vehicle, that is the part including the rear seats and the luggage compartment. The cover for the front part of the vehicle, indicated 4 in Figure 1, may be constituted by a rigid or flexible roof of any known type.

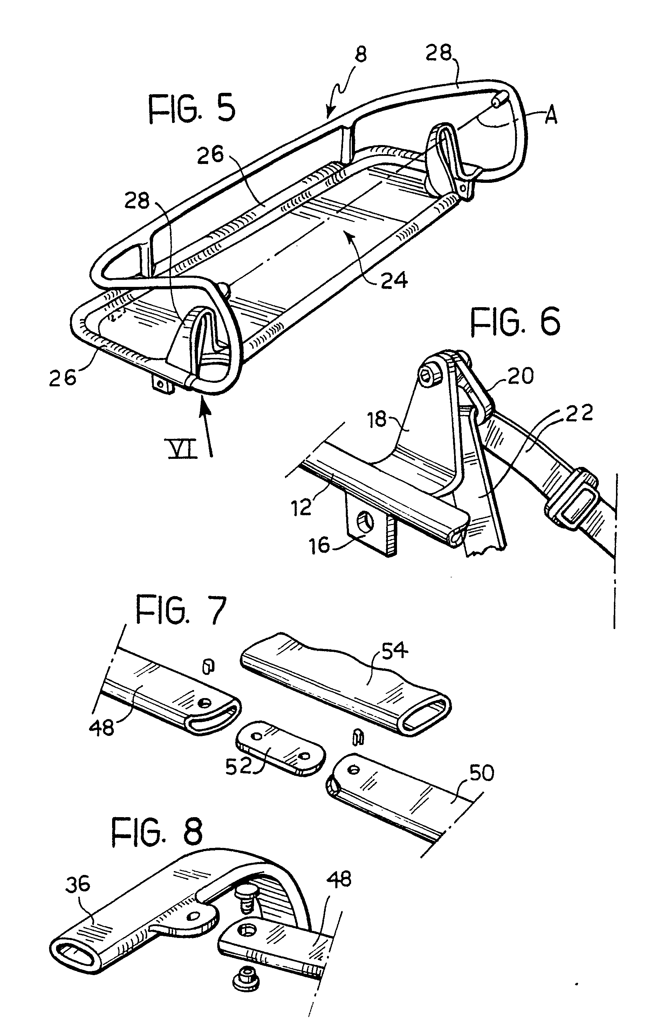

With reference to Figures 2 to 4, a structure for supporting the fabric hood 2 is indicated 6. The support structure 6 includes a fixed base structure 8, constituted essentially by a shaped tubular member with an upper arm 10 and a lower arm 12 each bent into a generally C-shaped configuration and interconnected at their ends by connecting elements 14. Four apertured plates 16 are fixed to the lower arm 12 of the fixed structure 8 for attaching the structure 8 to the rear part of the body of the vehicle 1. A pair of vertical plates 18 is also fixed to the lower arm 12 of the fixed structure 8 and, as shown in Figure 6, serve as attachments for the upper elements 20 of the rear safety belts 22. As shown in Figure 5, a tray-shaped platform 24 is fixed to the lower arm 12 of the fixed structure 8 and has a shaped edge 26 which covers the lower arm 12 and also shaped portions 28 which cover the plates 18. When the hood is in the closed position, the platform 24 acts as a housing for the hood fabric 2.

An arcuate intermediate structure 30 is connected to the fixed structure 8 and is articulated at its ends 32 to the fixed structure 8 about a transverse axis A.

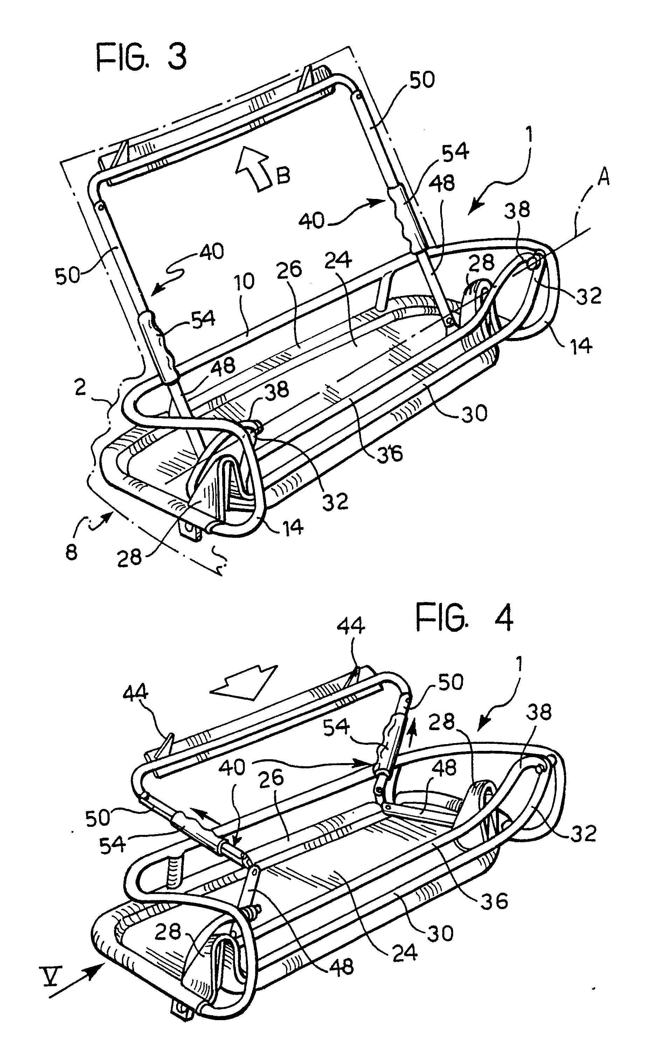

The support structure 6 also includes a front structure 34 which in turn includes an arcuate element 36 whose ends 38 are articulated to the fixed structure 8 about the same articulation axis A as the intermediate structure 30. The rear ends of a pair of side arms 40 are articulated to the arcuate element 36 of the front structure 34 while their front ends are articulated to a front cross member 42 which has attachments 44 for its connection to an intermediate cross member of the vehicle bodywork, indicated 46 in Figure 1. Figure 8 shows a detail of the articulation of one of the side arms 40 to the arcuate element 36. Each of the side arms 40 is constituted by two portions of equal length, indicated 48 and 50, interconnected by means of a connecting part 52 which is articulated to the adjacent ends of the portions 48, 50 (see, in particular, the detail of Figure 7). A sleeve 54 of moulded plastics material is slidable on each side arm 40 and can be moved manually between a first operative position, in which the whole sleeve 52 extends over one of the portions 48, 50 (see Figure 4), and a second operative position in which the sleeve 52 extends across the articulation zone between the two portions 48, 50 (Figures 2, 3).

The fabric cover 2, which is shown in broken outline in Figures 2 and 3, is fixed to the lower arm 12 of the fixed structure 8, to the intermediate structure 30, and to the front cross member 42 of the front structure 34.

The operation for folding the fabric hood 2, starting from the configuration shown in Figure 2, will be described below. First of all, the attachments 44 which fix the cross member 42 to the intermediate bodywork element 46 are released. The front structure 34 is then pivoted in the sense indicated by the arrow B in Figure 3 so that the intermediate structure 30 and the arcuate element 36 pivot about their articulation axis A until they reach the configuration shown in Figure 3. At this point the sleeves 54 are slid manually along the respective arms 40 releasing the articulation region between the portions 48, 50. Upon completion of this operation, the portions 48, 50 of the arms 40 are free to pivot about their articulation axes as shown in Figure 4. When the hood 2 is folded, the intermediate structure 30 and the front structure 36 fit on top of the platform 24 in the space defined by the fixed structure 8. The steps for unfolding the hood from its folded configuration to its extended configuration are the opposite of those described above.

## Claims

1. A support structure for a flexible folding rear hood for motor cars, characterised in that it comprises:

a) a fixed base structure (8),

b) an arcuate intermediate structure (30) articulated at its ends (32) to the fixed structure (8) about a transverse axis (A), and

c) a front structure (34) comprising:

- an arcuate element (36) articulated at its ends (38) to the base structure (8) about the same articulation axis (A) as the intermediate structure (30),

- a pair of side arms (40) articulated at their rear ends to the arcuate element (36), and

- a front cross member (42) which is articulated to the opposite ends of the arms (40) from the intermediate structure (30) and which has attachments (44) for its rapid connection to an intermediate cross member (46) of the bodywork,

- each of the arms (40) including two portions (48, 50) which are articulated to each other at its centre by means of a connecting part (52) and a sleeve (54) which is slidable along the arm (40) and is movable between a first operative position in which the sleeve (54) extends exclusively over one of the portions (48, 50) and a second operative position, in which the sleeve (54) extends across the region of articulation of the two portions (48, 50).

2. A structure according to Claim 1, characterised in that the fixed base structure (8) comprises a shaped tubular profile with an upper arm (10) and a lower arm (12) each bent into a general C-shaped configuration and interconnected at their ends by connecting elements (14); a tray-shaped platform (24) being fixed to the lower arm (12) of the fixed structure (8) and having a shaped edge (26) covering the lower arm (12)

3. A structure according to Claim 1, characterised in that the fixed base structure (8) is provided with a pair of vertical plates (18) for the attachment of the rear safety belts of the vehicle.

FIG. 1

FIG. 2

FIG. 9

# FIG. 3

# FIG. 4

FIG. 5

FIG. 6

FIG. 7

FIG. 8

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 584 029 (BOURSALT) <br> * the whole document * <br><br> — — — | 1 | B 60 J 7/12 |
| Y | US-A-1 788 940 (BARKER) <br> * the whole document * <br><br> — — — — — | 1 | |

| TECHNICAL FIELDS SEARCHED (Int. Cl.5) |
|---|
| B 60 J |

The present search report has been drawn up for all claims

| Place of search | Date of completion of search | Examiner |
|---|---|---|
| The Hague | 01 November 90 | FOGLIA A. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document